# EUROPEAN PATENT APPLICATION

(11) **EP 3 026 866 A1**
(43) Date of publication of application: **01.06.2016**
(21) Application number: 15202298.4
(22) Date of filing: 26.06.2009
(51) Int. Cl.: H04L 29/06, H04N 5/445, H04N 21/235, H04N 21/431, H04N 21/435, H04N 21/466, H04N 21/472, H04N 21/475, H04N 21/643, H04N 21/858, H04L 29/08

(54) **METHOD OF DELIVERING CUSTOMER CONTACT SERVICE TO IPTV VIEWER**

(30) Priority: 08.07.2008 US 169327
(62) Divisional of application: 09776854.3
(71) Applicant: APPLE INC., Cupertino, CA 95014 (US)
(72) Inventor: O'CONNOR, Neil, Lackagh (IE); MCCORMACK, Tony, Galway (IE)
(74) Representative: Lang, Johannes

(57) **Abstract**

An application for a client device which is arranged to receive and render selected video streams including content indicators relating to content to be rendered at a given location on a screen of the client device is disclosed. The application responds to user interaction with a rendered stream at rendered locations of the content to store an indicator of the user's interest in the content. The application then cooperates with an analyzer, arranged to analyze the user's interest in the content, and responds to the interest satisfying business logic by providing an indication of an interaction opportunity to the user of the client device during the rendering of the video stream.

## Description

The present invention provides an IPTV (Internet Protocol Television) application, a method of operating an IPTV device, and an IPTV system.

### Background

IPTV involves the delivery of streams of video from media servers typically across a packet switched network to a client device where a selected stream is rendered for viewing by a user of the client device. The transport medium for the video streams can include the conventional Internet with streams flowing from media servers to conventional client computers and including the mobile telephony network where streams are received on mobile phones; as well as the cable network and satellite channels where streams are received at set top boxes and rendered on televisions (if the set-top box functionality is not integrated within the television) - in such cases acting more as monitors for the set top box than tuners. In the case of clients connected to the Internet, a ready upstream channel from the client device is provided enabling the user to interact with the client device and for the device to send upstream requests based on this interaction. In the case of a cable network or satellite, typically the upstream channel is provided through further connection of the client device to 20 the telephone network either wired or wireless and normally through a packet switched session.

Interactive IPTV services today typically involve simple clickable content for on-screen browsing, obtaining further information on a selected product, or voting on online polls.

There is an opportunity to provide more relevant opportunities for interaction with the user and enabling the stimulation of commerce, education and entertainment through this medium.

### Summary of the Invention

According to the present invention there is provided an application for a client device which is arranged to receive and render selected video streams including content indicators relating to content to be rendered at a given location on a screen of the client device. The application responds to user interaction with a rendered stream at rendered locations of the content to store an indicator of the user's interest in the content. The application then cooperates with an analyzer, arranged to analyze the user's interest in the content, and responds to the interest satisfying business logic by providing an indication of an interaction opportunity to the user of the client device during the rendering of the video stream.

Embodiments of the invention enable the delivery of tailored customer contact service to the viewer of an IPTV session.

This invention provides an approach by which the images in the video frames can be interacted with directly. It also provides for contextually scoped interaction with the image itself (as opposed to a visual artefact that is overlaid on the video feed). Further, this invention provides a platform for deriving a suitable communication address (e.g. a SIP URI or simple telephone address) for the purpose of establishing either an outbound or inbound session to a contact center, or to a self service application such as an IVR system.

The indication of an interaction opportunity can include a screen indicator, and the application can be responsive to a user selecting the indicator to launch the interaction opportunity.

Preferably, the indication of an interaction opportunity includes a screen indicator and the application is responsive to a user focusing on the indicator to provide information relating to the interaction opportunity.

Preferably, the application is arranged to automatically launch the interaction opportunity in response to the interest satisfying the business logic by sending a request to a remote server based on the business logic, the indication of an interaction opportunity comprising a first response from the remote server to the request.

Further, preferably, the analyzer is arranged to analyze the user's interest in the content, the analyzer being responsive to the interest satisfying business logic for providing the indication of an interaction opportunity to the user.

The analyzer can, if appropriate, be arranged to access the business logic on one of the client device or a remote server.

Preferably, the application is arranged to store the user's interest in the content on one of the client device or a remote server.

The invention also provides a system including at least one client device on which an application as aforesaid is resident and a server remote from the at least one client device and operable to communicate with the at least one client device across a network.

Preferably, in such a system, the analyzer is resident on the remote server, the analyzer being arranged to analyze a client device user's interest in the content, and the analyzer being responsive to the interest satisfying business logic for providing the indication of an interaction opportunity to the user's client device.

The business logic may include a plurality of links, each corresponding to an interaction opportunity.

The links can include any combination of: SIP URI; HTTP URL; telephone number; or e-mail address.

In some embodiments, the business logic includes descriptive information associated with each link, the application being arranged to provide the information on the client device in association with an interaction indicator for the link.

The invention further provides a client device including the application as aforesaid, the client device being arranged to receive a video stream across a network and being arranged to communicate with a remote server to provide the interaction opportunity to a user of the device.

The client device can be embodied as one of a general purpose computer; a television; or a mobile computing device, and the network can be one of: a terrestrial broadcast network; a satellite broadcasting network; the Internet; or a mobile telephony network.

The invention also provides a method of operating a client device arranged to receive and render selected video streams, the video streams including content indicators relating to content to be rendered at a given location on a screen of the client device, the method including the steps of:
- responsive to user interaction with a rendered stream at rendered locations of the content, storing an indicator of the user's interest in the content,
- analyzing the user's interest in the content; and
- responsive to the interest satisfying business logic, providing an indication of an interaction opportunity to the user of the client device during the rendering of the video stream.

### Brief Description of the Drawings

Various embodiments will now be described, by way of example, with reference to the accompanying drawings, in which:

Figure 1 is a schematic view of an IPTV system including a client device running an application according to an embodiment of the invention; and

Figure 2 is a flow diagram illustrating a method of operating the client device of Figure 1.

### Description of the Preferred Embodiments

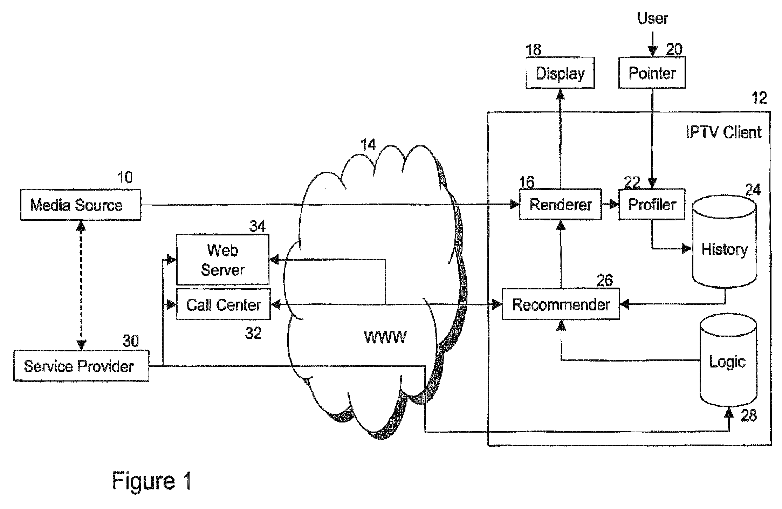

With reference to Figure 1, it will be noted that not all interaction between various components of the system and in particular the components of the client device is shown for clarity.

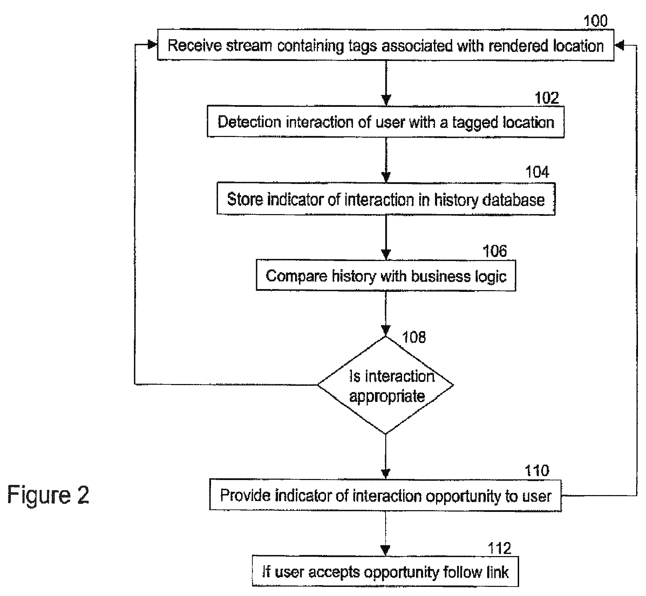

The system includes a media source 10 which is arranged to broadcast video streams to a plurality of clients 12 (only one shown) across a network 14, step 100 of Figure 2. As explained in the introduction, the network can comprise any transport medium and typically involves a packet switched network.

Where the media source 10 is for example a web server, user selection of a stream may involve a specific request to the server and the establishment of a connection between the client and server for transmitting the stream. On the other hand, where the source 10 is a cable head end server, all streams are transmitted to client devices (set top boxes) on the cable network and the user interacts with an application, such as a television guide running on the set top box to select a channel for display, or indeed more than one channel where Picture-in-Picture is available.

Now, it is well known for set top boxes which may be capable of receiving hundreds to channels to run recommender programs. Such recommender programs use television guide information which provides a programme name, a programme summary, programme time, programme genre and possibly programme rating to track a user's interest in various channels watched over a period of time. The recommender program can then modify various menus to 15 for example highlight or indeed proactively record programmes which the user may be more interested in based on their viewing history. Although useful in cooperation with the present invention, on its own, this provides relatively limited potential for meaningful interaction with the user.

In embodiments of the present invention, at least some of the streams being transmitted by the media source include indicators (tags) associated with content to be rendered at particular locations on the client device. So, for example, a portion of a stream from time T₁ to T₂ in which an object O is to be displayed at a location x,y; or within say a rectangular region defined by diagonal comers x₁,y₁ and x₂,y₂ ; or a circular region having a centre x₁,y₁ and radius r; or indeed any other such regional definition, may include tag T.

A formalized scheme for such tagging is being proposed for MPEG-4 streams or indeed as part of the MPEG-7 standard.

Other potential tagging implementations include defining a grid for frames of the rendered video stream. For each tile of the grid for a given frame or set of frames or pre-determined time period, a tag T may be provided. Again, the tags are transmitted with the video stream and are received by an application 16 for rendering the stream on a display portion 18 of the client device. So, for example, when viewing a travel programme, a beach, a hotel, and a yacht may be visible and have corresponding tags associated with a number of tiles for the time periods for which these objects are being displayed.

It will be appreciated that in conventional computing devices, a pointer 20 enables a user to indicate of particular portion of a display which of interest. This may involve an application or object being displayed in a portion of the screen controlled by the application gaining and/or losing focus or indeed the user may click or otherwise indicate selection of the application/object.

In set top boxes implementing the present invention, the user is not alone able to control the box to select channels and control the set, for example, changing the volume, but also, the user is able to "'point" to a location on the screen using a pointer 20. Many suitable and in particular wireless devices are available for enabling such pointing and further description is not necessary here, however, it is sufficient to say that the client device when rendering a stream on the display 18 is able to track any locations on said display to which the user may periodically point or otherwise navigate and possibly select, step 102 of Figure 2.

It is an object of the present invention to enable user interaction with the image to provide additional information (e.g. contact details for a hotel or surf lessons available at the beach) to the user.

In particular, however, embodiments of the invention are arranged to record and store a user's interest in various objects being displayed at particular locations on said display, step 104 of Figure 2.

In the embodiment shown, a profiler application 22 is arranged to monitor the tags for the video stream being rendered and (possibly) furthermore to monitor the x,y location indicated by the pointer 20 within the rendered video stream as well as any location on the display which the user may select with the pointer. Any such interaction with objects is stored by the profiler in a database 24. It will be appreciated that in the embodiment, the database shown is local to the client, however, it will be appreciated that this may only involve temporary storage before database information is uploaded to a remote service provider site 30. In such cases, the database information may be aggregated or pre-processed as required before being transmitted.

Business logic rules 28 are provided by the service provider 30. Again, in the embodiment shown, the rules are shown stored locally having being downloaded from the service provider. Nonetheless, it will be appreciated that where it may be more convenient, the rules may be stored at the service provider or natively embedded or resident on the client 12.

A recommender 26 may be resident on the client device or again might reside on a remote service provider, but in any case, the recommender has access to the history information 24 and the business logic 28.

As information is added to the history database 24 or indeed when business logic 28 changes, the recommender 26 analyses each with a view to determining if the business logic includes a suitable interaction opportunity for the user, step 106 of Figure 2.

Thus, in a simple case, the business logic could contain rules which indicate that it may be appropriate to indicate to a user that had interacted with a piece of content associated with a tag "HOTEL", that an opportunity relating to that interaction may be available, step 108 of Figure 2.

However, the recommender 26 does not necessarily determine that an interaction opportunity 25 is appropriate from an individual interaction instance. So, for example, more complex rules may respond to a user continuing to "interact" with other hotels for the subsequent minutes of a programme or other programmes. The recommender 26 may then match such interaction history with rules which relate to an opportunity relevant to the user being, for example, interested only in beachfront hotels in a particular resort.

In any case, when the rules have determined that a suitable interaction opportunity is available, the recommender 26 provides an indicator for rendering on the display 18 in conjunction with the video stream being rendered, step 110 of Figure 2.

This can be as simple as an interaction indicator provided on the screen for a given period of time and which the user may select either just by focusing the pointer 20 on the indicator to receive hover help information comprising for example a brief description of the opportunity or indeed by clicking on the indicator to launch the interaction.

In other implementations the application may automatically launch the interaction as described below.

In one implementation of the invention, the business rules contain a link to a remote server 32, 34 and interaction begins by launching this link when the interaction indicator is selected by the user, step 112 of Figure 2. In such implementations, the link may be a suitable SIP URI, for example, sip:beachHouseRentals@cc.tourism.bermuda.com, with a brief description indicating that if the interaction indicator is selected by the user, an interactive session with a suitable agent based at a call center 32 will be established. In other implementations, the link may be a more conventional HTTP URL, for example, http://cc.tourism.bermuda.com/beachHouseRentals, again with a brief text description, which indicates that when the interaction indicator is clicked, a request will be sent to a web server. Other links could include e-mail addresses or phone numbers again with suitable descriptors.

In any case, each of the call center 32 or web server 34 can be controlled by the service provider 30 which is in a position to match the offers made available by the call center agent or the web pages supplied by the web server with the information contained in the request originating from the client device.

It will also be seen that the original request to the call center 32 need not initially provide a human agent response, but could involve for example an IVR application which determines a user's interest more closely before offering a human contact center service agent connection.

As such, it will be seen that embodiments of the invention can utilize finely granular and real-time annotation and/or markup of video streams to enable dedicated interaction opportunities to be supplied to users of network client devices.

It will be seen that as the software required to implement the invention is relatively straight forward to deploy with new generations of IPTV player or even by updating the software of existing players, there is an incentive both for original media sources, for example, film companies, to tag their media, so that they might generate new sources of income with advertisers and/or for service providers to retro-tag media as a new means for driving advertising. Such tagging can occur off-line prior to delivery of the IPTV stream, or it may occur dynamically as the stream is being broadcast, assuming sufficient processing power and intelligent software is available to automate this task in real- or quasi- time.

It will be seen that rules of any complexity can be added to the business rules database 28 based combinations of tags from which an advertiser may wish to generate an interaction opportunity.

Although the invention can be defined as stated in the attached claims, it is to be understood that the present invention can alternatively also be defined as stated in the following embodiments:
1. An application operable on a client device arranged to receive and render selected video streams, said video streams including content indicators relating to content to be rendered at a given location on a screen of said client device, said application being responsive to user interaction with a rendered stream at rendered locations of said content to store an indicator of said user's interest in said content, said application being cooperable with an analyzer arranged to analyse said user's interest in said content and said application being responsive to said interest satisfying business logic for providing an indication of an interaction opportunity to said user of said client device during the rendering of said video stream.
2. The application of embodiment 1 wherein said indication of an interaction opportunity comprises a screen indicator and wherein said application is responsive to a user selecting said indicator to launch said interaction opportunity.
3. The application of embodiment 1 wherein said indication of an interaction opportunity comprises a screen indicator and wherein said application is responsive to a user focusing on indicator to provide information relating to said interaction opportunity.
4. The application of embodiment 1 wherein the application is arranged to automatically launch said interaction opportunity in response to said interest satisfying said business logic by sending a request to a remote server based on said business logic, said indication of an interaction opportunity comprising a first response from said remote server to said request.
5. The application of embodiment 1 further in which said analyzer is arranged to analyse said user's interest in said content, said analyzer being responsive to said interest satisfying business logic for providing said indication of an interaction opportunity to said user.
6. The application of embodiment 5 wherein said analyzer is arranged to access said business logic on one of said client device or a remote server.
7. The application of embodiment 1 wherein said application is arranged to store said user's interest in said content on one of said client device or a remote server.
8. A system comprising at least one client device on which an application according to embodiment 1 is resident and a server remote from said at least one client device and operable to communicate with said at least one client device across a network.
9. The system of embodiment 8 wherein said analyzer is resident on said remote server, said analyzer being arranged to analyse a client device user's interest in said content, and said analyzer being responsive to said interest satisfying business logic for providing said indication of an interaction opportunity to said user's client device.
10. The application according to embodiment 1 wherein said business logic comprises a plurality of links, each corresponding to an interaction opportunity.
11. The application according to embodiment 10 wherein said links comprise any combination of: SIP URI; HTTP URL; telephone number; or e-mail address.
12. The application according to embodiment 10 wherein said business logic includes descriptive information associated with each link, said application being arranged to provide said information on said client device in association with an interaction indicator for said link.
13. A client device including the application according to embodiment 1, said client device being arranged to receive a video stream across a network and being arranged to communicate with a remote server to provide said interaction opportunity to a user of said device.
14. The client device of embodiment 13 comprising one of a general purpose computer; a television; or a mobile computing device and wherein said network comprises one of: a terrestrial broadcast network; a satellite broadcasting network; the Internet; or a mobile telephony network.
15. A method of operating a client device arranged to receive and render selected video streams, said video streams including content indicators relating to content to be rendered at a given location on a screen of said client device, said method including the steps of: responsive to user interaction with a rendered stream at rendered locations of said content, storing an indicator of said user's interest in said content, analysing said user's interest in said content; and responsive to said interest satisfying business logic, providing an indication of an interaction opportunity to said user of said client device during the rendering of said video stream.

## Claims

1. A method of operating a client device, the method comprising:
receiving a video stream, wherein the video stream comprises video information and at a tag associated with content comprised in the video information, wherein the content is to be rendered at a particular location on a screen of the client device;
rendering the video stream, wherein the content is displayed at the particular location on the screen of the client device when the video information is displayed on the screen, wherein the particular location is identified by the tag;
detecting interaction with the content;
storing an indicator representative of the detected interaction in a database that stores a plurality of indicators representative of a history of interactions corresponding to multiple interactions with the content at different times; and
providing an interaction opportunity indicator representative of a suitable interaction opportunity for rendering on the screen of the client device during the rendering of the video stream, responsive to the history of interactions satisfying a specified business logic.

2. The method of claim 1, wherein the interaction is by a user of the client device.

3. The method of claim 1, further comprising:
detecting a further interaction with the content at a further point in time; and
storing, in the database, an additional indicator representative of the detected further interaction.

4. The method of claim 1, further comprising:
performing analysis on the history of interactions and the specified business logic; and
determining, based on the analysis, whether the stored history of interactions satisfies the specified business logic.

5. The method of claim 1, further comprising:
rendering the interaction opportunity indicator on the screen in conjunction with the rendering the video stream on the screen.

6. The method of claim 5, further comprising:
initiating an interaction in accordance with the suitable interaction opportunity, responsive to detecting an interaction with the interaction opportunity indicator.

7. The method of claim 5, further comprising:
providing information relating to the suitable interaction opportunity, responsive to an interaction with the interaction opportunity indicator.

8. The method of claim 1, further comprising:
automatically sending a request to a remote server based on the specified business logic and according to the suitable interaction opportunity, responsive to the stored history of interactions satisfying the specified business logic;
wherein the interaction opportunity indicator comprises a first response to the request from the remote server.

9. The method of claim 1, wherein the database is located on one or more of the following:
a client device that receives the video stream; or
a remote server remote from the client device.

10. The method of claim 1, wherein the specified business logic comprises a plurality of links, each respective link of the plurality of links corresponding to a respective suitable interaction opportunity.

11. The method of claim 10, wherein the plurality of links comprise any combination of:
Session Initiation Protocol Uniform Resource Identifier (SIP URI);
Hypertext Transfer Protocol Universal Resource Locator (HTTP URL);
telephone number; or
e-mail address.

12. The method of claim 10, wherein the specified business logic further comprises respective descriptive information associated with each respective link;
wherein the method further comprises:
providing the respective descriptive information in conjunction with providing an interaction indicator for the respective link as part of providing the interaction opportunity indicator.

13. A system comprising:
at least one client device configured to perform the method of any of claims 1 to 12;
a server remote from the at least one client device and operable to communicate with the at least one client device across a network.

14. A client device configured to perform the method of any of claims 1 to 12.

15. A computer program containing instructions executable by a client device, which, when executed by the client device, cause the client device to perform the method of any of claims 1 to 12.
